Europäisches Patentamt

European Patent Office

Office européen des brevets

(11) Numéro de publication : **0 323 293 B1**

# FASCICULE DE BREVET EUROPEEN

(45) Date de publication du fascicule du brevet :
27.02.91 Bulletin 91/09

(51) Int. Cl.⁵ : **G01G 19/02, G01G 21/22**

(21) Numéro de dépôt : 88403099.0

(22) Date de dépôt : 07.12.88

(54) Dispositif pour le pesage de véhicules.

(30) Priorité : 24.12.87 FR 8718159

(43) Date de publication de la demande :
05.07.89 Bulletin 89/27

(45) Mention de la délivrance du brevet :
27.02.91 Bulletin 91/09

(84) Etats contractants désignés :
AT BE CH DE ES GB GR IT LI LU NL SE

(56) Documents cités :
EP-A- 0 161 103
CA-A- 1 211 481

(56) Documents cités :
FR-A- 2 576 335
GB-A- 2 125 175
US-A- 2 962 276
US-A- 4 203 497

(73) Titulaire : **Largenton, Jean-Luc**
**9, rue des Parmentiers**
**Metz (Moselle) (FR)**

(72) Inventeur : **Largenton, Jean-Luc**
**9, rue des Parmentiers**
**Metz (Moselle) (FR)**

(74) Mandataire : **Cabinet Pierre HERRBURGER**
**115, Boulevard Haussmann**
**F-75008 Paris (FR)**

Jouve, 18, rue Saint-Denis, 75001 PARIS

**Description**

L'invention concerne un dispositif pour le pesage de véhicules.

Les dispositifs connus de ce genre se composent de poutres longitudinales qui sont reliées l'une à l'autre par des entretoises formant ensemble une structure rigide et sur laquelle sont fixées des longrines. Le tablier en béton ou en acier est ensuite posé en appui sur ces longrines. L'état de la technique comprend par exemple des documents suivants : GB-A-2125 175, EP-A-0161 103, US-A-2962 276.

Cependant, une telle disposition présente divers inconvénients relatifs, notamment, à la hauteur relativement importante du dispositif, à sa difficulté de transport et de montage, à son coût important, ce coût étant encore augmenté par le fait que les poutres longitudinales doivent être extrêmement rigides malgré leur longueur, afin d'éviter qu'elles prennent une flèche trop importante lorsque le dispositif supporte une charge, cette flèche influençant alors la précision du pesage.

La présente invention a en conséquence pour but de remédier à ces inconvénients et concerne à cet effet un dispositif pour le pesage de véhicules, comprenant un tablier de forme générale rectangulaire supporté par une embase par l'intermédiaire de capteurs de force, dispositif caractérisé en ce que le tablier se compose d'au moins deux panneaux, ces panneaux étant disposés en appui d'extrémité sur au moins deux poutres transversales reposant à leurs extrémités sur des capteurs.

Suivant une autre caractéristique de l'invention, les poutrés transversales reçoivent en appui les extrémités des deux panneaux qui délimitent entre eux un canal (8).

Suivant une autre caractéristique de l'invention, les poutres transversales présentent à leurs extrémités des surfaces venant en appui sur les capteurs, eux-mêmes disposés en appui sur l'embase, ces surfaces des extrémités des poutres étant décalées vers la face supérieure de la poutre.

Suivant une autre caractéristique de l'invention, les poutres transversales sont pourvues à leurs extrémités, de profilés en Z dont les branches horizontales supérieure et inférieure sont en appui sur les poutres, la branche verticale et la branche horizontale inférieure étant fixées par soudure, respectivement aux chants d'extrémités des panneaux et à leur face inférieure.

Suivant une autre caractéristique de l'invention, le dispositif comporte trois poutres transversales équidistantes, le tablier se composant de quatre panneaux placés deux à deux en appui sur une poutre transversale d'extrémité et sur la poutre transversale médiane.

L'invention est représentée à titre d'exemple non limitatif sur les dessins ci-joints dans lesquels :

– la figure 1 est une vue en perspective d'un premier mode de réalisation du dispositif de pesage;
– les figures 2 et 3 sont respectivement des vues de dessus et latérale de la poutre transversale médiane du dispositif de la figure 1 ;
– les figures 4 et 5 sont respectivement des vues de dessus et latérale d'une des poutres transversales d'extrémité du dispositif de la figure 1 ;
– les figures 6 et 7 sont respectivement des vues en coupe longitudinale et de dessus de la traverse fixe d'extrémité du dispositif de la figure 1 ;

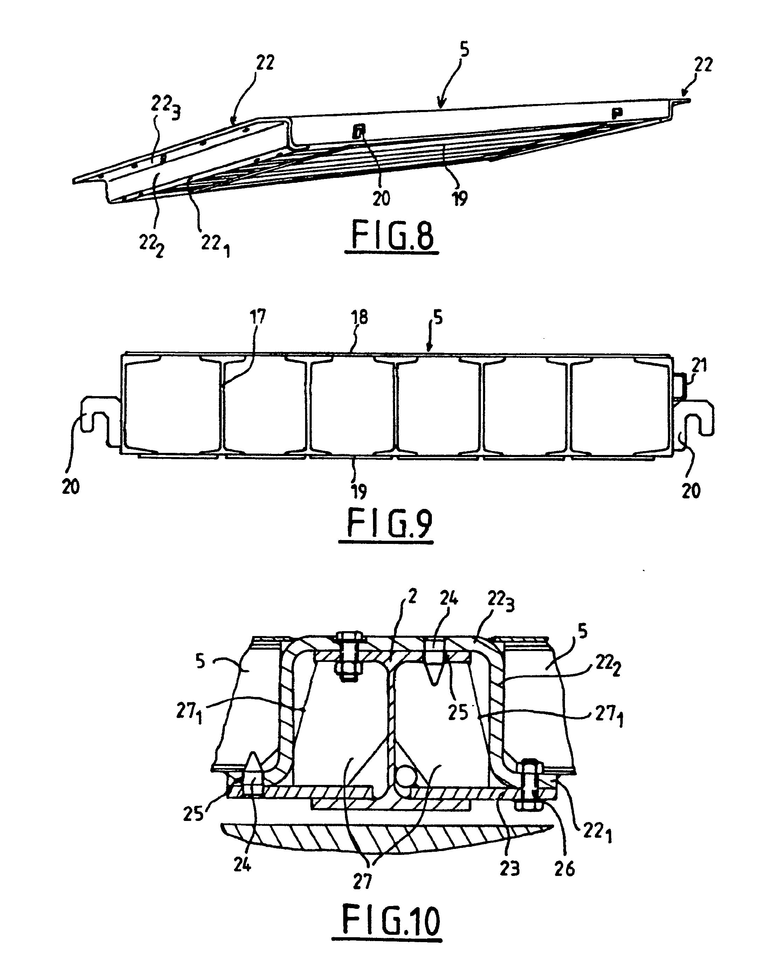

– la figure 8 est une vue en perspective d'un panneau du tablier du dispositif de la figure 1 ;
– la figure 9 est une vue en coupe transversale du panneau de la figure 8 ;
– la figure 10 est une coupe partielle représentant l'appui des panneaux sur les poutres transversales ;

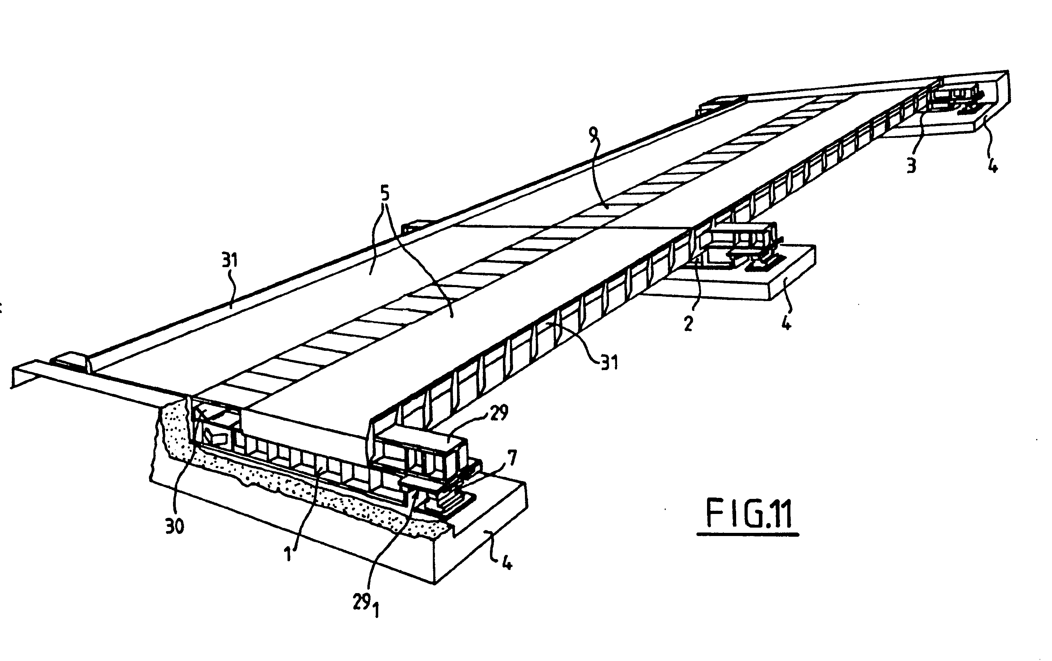

– la figure 11 est une vue en perspective d'un autre mode de réalisation du dispositif de pesage conforme à l'invention ;

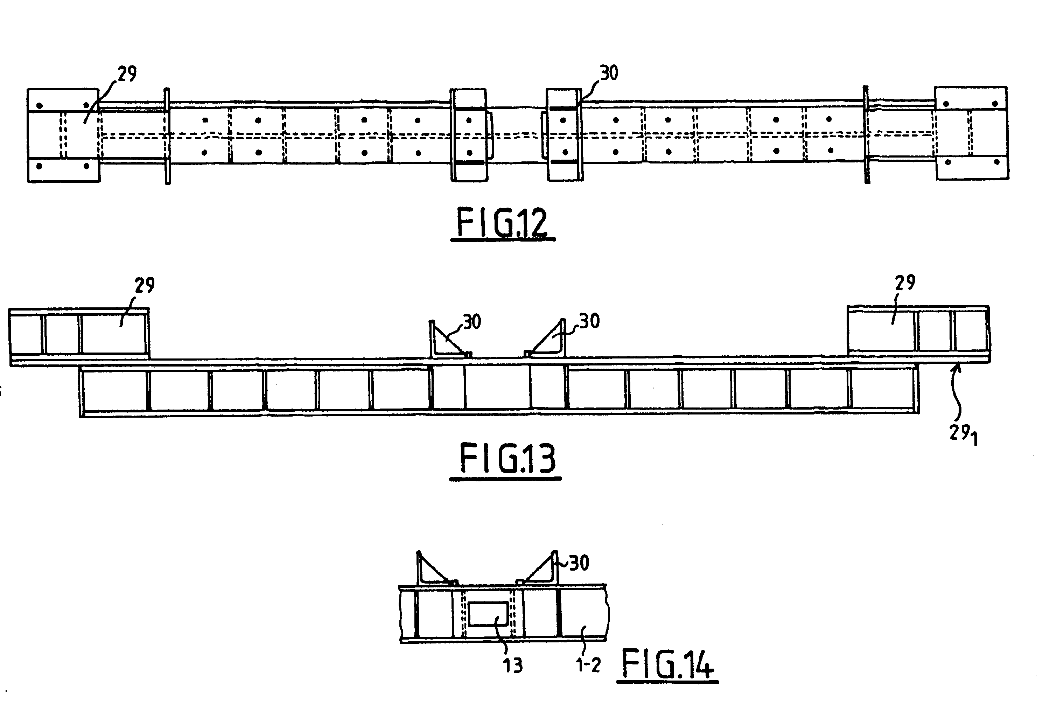

– les figures 12 et 13 sont respectivement des vues de dessus et latérale des poutres transversales du dispositif de la figure 11 ;
– la figure 14 est une vue latérale de la partie centrale d'une poutre transversale d'extrémité.

Le dispositif de pesage de véhicules représenté sur les figures de 1 à 10 comprend trois poutres transversales 1, 2 et 3 qui sont disposées en appui sur une embase 4 composée, dans ce cas, de trois socles en béton se plaçant chacun sous l'une des poutres.

Ces trois poutres transversales équidistantes et parallèles 1, 2 et 3, supportent deux à deux quatre panneaux 5 qui sont chacun montés en appui, par leurs extrémités, d'une part sur la poutre transversale médiane 2, d'autre part sur une poutre transversale d'extrémité 1 ou 3.

Cette disposition permet de réaliser des dispositifs de pesage de construction, de transport et de montage simples, ainsi que d'un coût réduit.

En effet, dans cette construction, les poutres transversales 1 dont la longueur est uniquement légèrement supérieure à la largeur d'un véhicule, sont en appui par leurs extrémités sur des capteurs de force 7, tandis que les panneaux 5 qui sont de longueur identique, sont placés deux à deux parallèlement l'un à l'autre, en délimitant entre eux un canal 8 pouvant éventuellement être obturé par un caillebotis 9.

Dans ce cas, la structure de support est donc constituée uniquement par des poutres transversales équidistantes qui supportent deux à deux des panneaux 5, formant des bandes de roulement pour le véhicule à peser.

Cette disposition permet également de réaliser sans aucune contrainte supplémentaire, des dispositifs de pesage de très grande longueur. Pour cela, il suffit en effet de rajouter une ou plusieurs poutres transversales et de la réunir avec les précédentes par une paire de panneaux 5 placés parallèlement et à distance l'un de l'autre.

Les poutres transversales 1, 2, 3 sont montées en appui sur les capteurs de force 7 par l'intermédiaire de surfaces d'appui 10 qui sont décalées vers la face supérieure 11 des poutres 1, 2 et 3, afin de réduire la hauteur du dispositif de pesage et d'éviter ainsi la nécessité de creuser une fosse avec tous les inconvénients que cela entraîne.

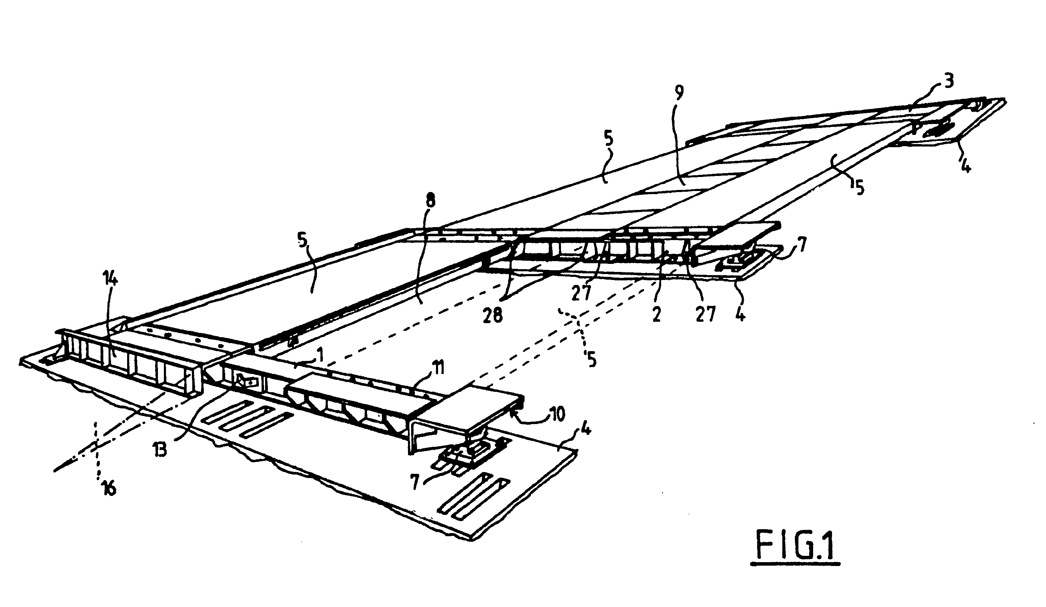

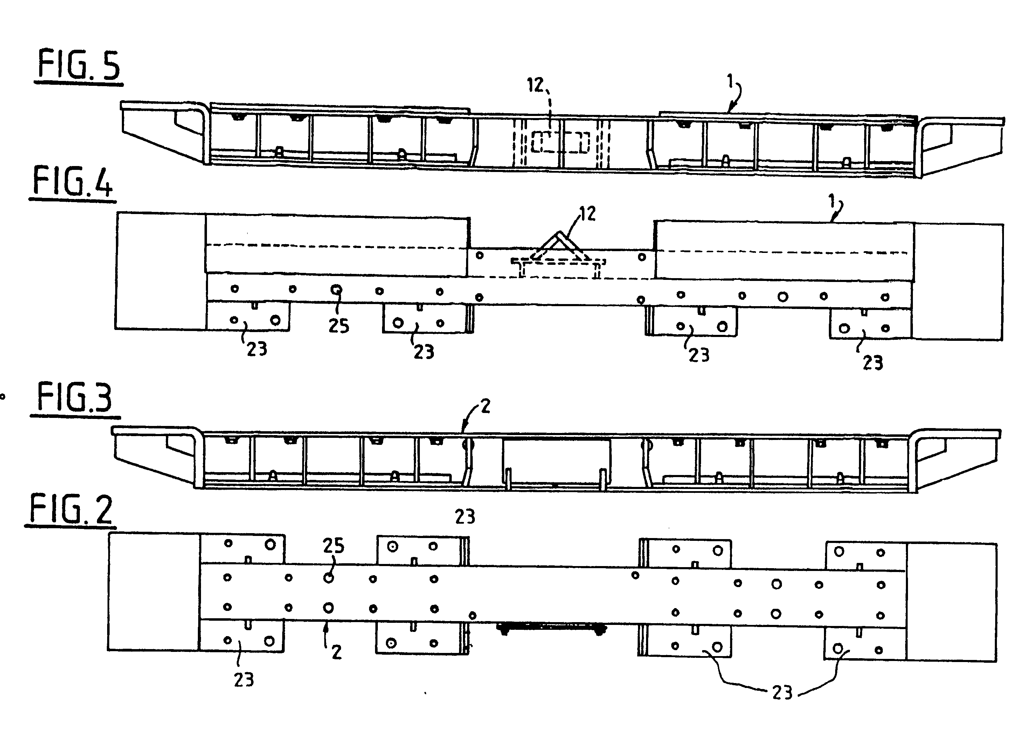

Les poutres d'extrémité (voir figures 1, 4 et 5) sont également pourvues d'une saillie 12 formée sur leur face latérale dirigée vers l'extérieur du dispositif de pesage. Ces saillies qui, dans ce cas, sont réalisées de forme triangulaire, sont destinées à venir se placer dans un logement de forme correspondante $14_1$ d'une traverse 14 (voir figures 1, 6 et 7). Ces traverses 14 sont scellées sur les socles 4 de l'embase par l'intermédiaire de surfaces d'appui 15 et sont disposées dans l'épaisseur du chemin de mise à niveau 16 (figure 1) destiné à permettre le roulage des véhicules sur le dispositif de pesage. Ces traverses 14 recevant ainsi dans leur logement $14_1$ les saillies 13 des poutres 1 et 2, constituent des butées de choc limitant les déplacements longitudinaux et transversaux de la partie de pesage proprement dite, constituée par les poutres transversales et les panneaux 5.

Les panneaux 5 sont constitués par des profilés parallèles 17 (voir figure 9) qui sont assemblés l'un à l'autre par soudure, d'une part par la surface de roulement 18, d'autre part par des plaques d'assemblage inférieures 19.

Sur les chants de ces panneaux, sont prévus des crochets 20 permettant leur manipulation par un moyen de levage lors de leur montage sur les poutres 1, 2 et 3. Le chant longitudinal des panneaux se situant à l'intérieur du dispositif, comporte également un profilé 21 sur lequel vient en appui les plaques du caillebotis 9 obturant le canal 8.

Les extrémités de ces panneaux 5 présentent des profilés en "Z", 22, dont la branche horizontale inférieure $22_1$ est fixée par soudure sous la face inférieure d'extrémité de ce panneau 5.

La branche verticale $22_2$ est, elle, fixée par soudure sur le chant de l'extrémité du panneau 5.

Par ailleurs, les poutres transversales comportent (voir figures de 2 à 5) des plaques d'appui inférieures 23 tandis que la hauteur du profilé en Z, 22, est déterminée pour que les branches horizontales $22_1$ et $22_3$ viennent respectivement en appui sur ces plaques 23 et sur la face supérieure des poutres 1, 2 et 3, de façon à réaliser un appui extrêmement résistant des panneaux sur les poutres, tout en répartissant la charge supportée par les panneaux sur toute leur largeur et donc sur la partie correspondante des poutres.

Le guidage des panneaux lors de leur mise en place sur des poutres, est assuré par des plots à extrémité conique 24 prévus sur le profilé en Z, 22, et sur les poutres 23, ces plots venant se loger dans des perçages de section correspondante formés dans la pièce en regard.

Ces plots, qui facilitent le guidage des panneaux lors de leur mise en place, constituent également des moyens coopérant à la rigidité de la structure du dispositif de pesage, notamment en évitant le déplacement latéral relatif des panneaux par rapport aux poutres.

Ces plots coopèrent ainsi à la rigidité de la structure du dispositif de pesage dont la seule liaison des poutres transversales est constituée par les panneaux 5 eux-mêmes. Cet assemblage est consolidé par des boulons 26.

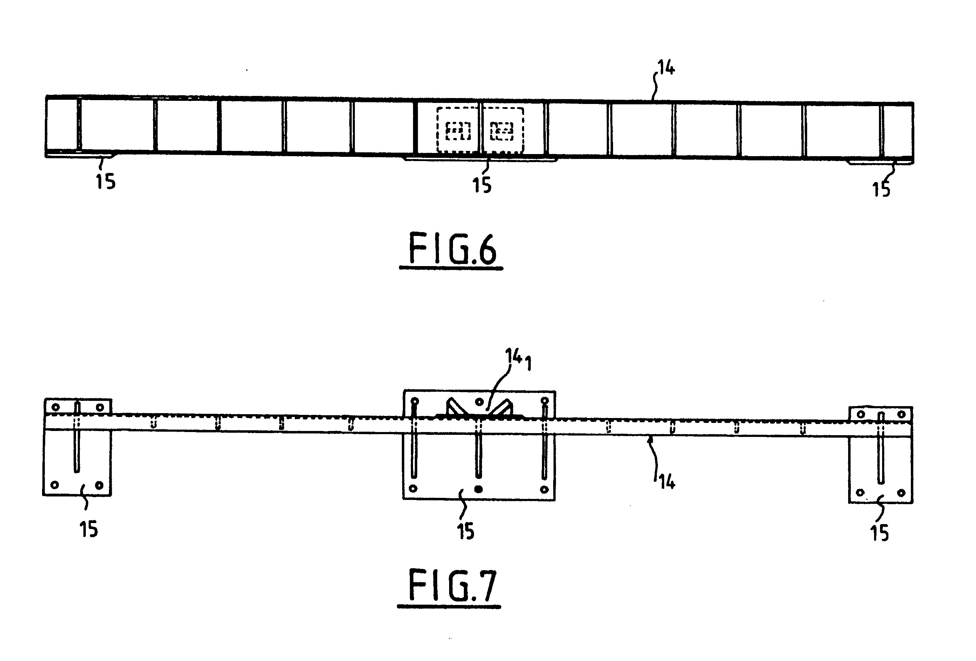

Egalement, les poutres transversales 1, 2, 3, sont pourvues (voir figures 1 et 5) de voiles de raidissage 27 dont le chant extérieur $27_1$ forme une surface oblique parallèle à l'axe longitudinal de la poutre, ces surfaces obliques permettant le guidage et le centrage longitudinal du panneau 5 lors de leur mise en place sur les poutres. Egalement, ces poutres sont pourvues (voir figure 1) de plaques obliques 28 disposées parallèlement à l'axe longitudinal du dispositif de façon à assurer le guidage et le centrage transversal des panneaux 5 lors de leur mise en place.

Suivant l'exemple de réalisation des figures de 11 à 14, les poutres transversales 1, 2, 3 recevant deux à deux en appui les panneaux 5, sont pourvues à l'extrémité de leur face supérieure, de parties en saillie 29 de façon que la face inférieure $29_1$ de ces parties 29, forme les surfaces d'appui pour les capteurs de force 7.

Dans ce cas, ces parties en saillie 29 constituent également des moyens de positionnement latéral des panneaux 5 disposés en appui sur les poutres 1, 2, 3. Des cornières 30 peuvent également être prévues sur les poutres transversales afin d'assurer le positionnement latéral du côté opposé des panneaux 5. Les poutres transversales d'extrémité comportent également la saillie latérale 13 coopérant avec le logement correspondant $14_1$ de la traverse fixe 14 pour constituer une butée de choc.

Chacun des panneaux 5 est également pourvu, sur son côté longitudinal se plaçant à l'extérieur du dispositif, d'un rebord 31 en saillie sur la face supérieure de ces panneaux afin de constituer un rebord de guidage pour les roues du véhicule.

## Revendications

1. Dispositif pour le pesage de véhicules, comprenant un tablier de forme générale rectangulaire supporté par une embase (4) par l'intermédiaire de capteurs de force (7), dispositif caractérisé en ce que le tablier se compose d'au moins deux panneaux (5), ces panneaux étant disposés en appui d'extrémité sur au moins deux poutres transversales (1, 2, 3) reposant à leurs extrémités sur des capteurs (7).

2. Dispositif conforme à la revendication 1, caractérisé en ce que les poutres transversales (1, 2, 3) reçoivent en appui les extrémités des deux panneaux (5) qui délimitent entre eux un canal (8).

3. Dispositif conforme à la revendication 2, caractérisé en ce que le canal est obturé par un caillebotis (9) prenant appui latéralement sur les panneaux.

4. Dispositif conforme à l'une quelconque des revendications précédentes, caractérisé en ce que les poutres transversales (1, 2, 3) présentent à leurs extrémités des surfaces (10) venant en appui sur les capteurs, eux-mêmes disposés en appui sur l'embase, ces surfaces des extrémités des poutres étant décalées vers la face supérieure (11) de la poutre.

5. Dispositif conforme à la revendication 4, caractérisé en ce que les surfaces décalées (11) sont formées sur la face inférieure de parties fixées en saillie sur la face supérieure des extrémités des poutres, ces parties en saillie formant des rebords de positionnement des panneaux de tablier.

6. Dispositif conforme à l'une quelconque des revendications précédentes, caractérisé en ce que les poutres transversales comportent au moins une saillie (13) sur leur face latérale dirigée vers l'extérieur du dispositif, ces saillies se plaçant avec jeu latéral dans des logements (14₁) correspondants prévus sur l'embase.

7. Dispositif conforme à la revendication 6, caractérisé en ce que les logements (14₁) des saillies latérales des poutres (1, 3) sont formes sur des traverses (14) scellées dans l'embase latéralement et à faible distance des poutres transversales.

8. Dispositif conforme à l'une quelconque des revendications précédentes, caractérisé en ce que les panneaux comportent un rebord longitudinal en saillie sur la face supérieure des panneaux, ce rebord étant situé longitudinalement à la périphérie du dispositif.

9. Dispositif conforme à l'une quelconque des revendications précédentes, caractérisé en ce que les poutres transversales sont pourvues a leurs extrémités, de profilés en Z (22) dont les branches horizontales supérieure (22₃) et inférieure (22₁) sont en appui sur les poutres, la branche verticale (22₂) et la branche horizontale inférieure (22₁) étant fixées par soudure, respectivement aux chants d'extrémités des panneaux (5) et à leur face inférieure.

10. Dispositif conforme à l'une quelconque des revendications précédentes, caractérisé en ce que les extrémités des panneaux (5) sont centrées et positionnées sur les poutres (1, 2, 3) par des plots (24) se logeant dans des orifices de section correspondante (25).

11. Dispositif conforme à l'une quelconque des revendications précédentes, caractérisé en ce que des crochets (20) sont prévus latéralement sur le chant des panneaux (5).

12. Dispositif conforme à l'une quelconque des revendications précédentes, caractérisé en ce que les poutres et/ou les panneaux sont pourvus de surfaces d'appui obliques (27₁, 28) de guidage des panneaux lors de leur mise en place sur les poutres.

13. Dispositif conforme à la revendication 12, caractérisé en ce que les surfaces d'appui obliques comprennent des surfaces d'appui (27₁) orientées parallèlement aux poutres et des surfaces d'appui (28) orientées parallèlement à l'axe longitudinal du dispositif.

14. Dispositif conforme à l'une quelconque des revendications précédentes, caractérisé en ce qu'il comporte trois poutres transversales (1, 2, 3) équidistantes, le tablier se composant de quatre panneaux (5) placés deux à deux en appui sur une poutre transversale d'extrémité (1, 3) et sur la poutre transversale médiane (2).

## Ansprüche

1. Vorrichtung zum Wiegen von Fahrzeugen mit einem Brückenbelag in einer im wesentlichen rechteckigen Form, unterstützt durch ein Fundament (4) unter Zwischenfügung von Kraftmessern (7), dadurch gekennzeichnet, daß der Brückenbelag sich aus mindestens zwei Paneelen (5) zusammensetzt und diese Paneele unter Auflage der Enden auf mindestens zwei mit ihren Enden auf den Kraftmessern (7) ruhenden Querträgern (1, 2, 3) angeordnet sind.

2. Vorrichtung nach Anspruch 1, dadurch gekennzeichnet, daß die Querträger (1, 2, 3) die Enden der zwei Paneele (5), die zwischen sich einen Kanal (8) eingrenzen, unter Auflage aufnehmen.

3. Vorrichtung nach Anspruch 2, dadurch gekennzeichnet, daß der Kanal durch einen seitlich auf den Paneelen sich abstützenden Lattenrost (9) abgeschirmt ist.

4. Vorrichtung nach einem der vorangehenden Ansprüche, dadurch gekennzeichnet, daß die Querträger (1, 2, 3) an ihren Enden Flächen (10) zur Auflage auf den Kraftmessern, die ihrerseits unter Auflage auf dem Fundament angeordnet sind, aufweisen, wobei diese Flächen der Querträger zur oberen Seite (11) des Querträgers hin verlagert sind.

5. Vorrichtung nach Anspruch 4, dadurch gekennzeichnet, daß die verlagerten Flächen (10) auf der unteren Fläche von an der oberen Seite der Enden der Querträger vorspringend befestigten Teilen gebildet sind, wobei diese vorspringenden Teile Positioniereinfassungen der Brückenbelagpaneele bilden.

6. Vorrichtung nach einem der vorangehenden Ansprüche, dadurch gekennzeichnet, daß die Quarträger mindestens einen gegen die Außenseite der Vorrichtung weisenden Vorsprung (13) auf ihrer Seitenfläche umfassen, wobei diese Vorsprünge mit seitlichem Spiel in entsprechenden im Fundament vorgesehenen Aufnahmen ($14_1$) Platz finden.

7. Vorrichtung nach Anspruch 6, dadurch gekennzeichnet, daß die Aufnahmen ($14_1$) der seitlichen Vorsprünge der Querträger (1, 3) auf in das Fundament seitlich und mit geringer Distanz von den Querträgern eingesetzten Traversen (14) gebildet sind.

8. Vorrichtung nach einem der vorangehenden Ansprüche, dadurch gekennzeichnet, daß die Paneele auf der oberen Seite der Paneele eine vorspringende Längseinfassung aufweisen, wobei die Einfassung längs des Randes der Vorrichtung angeordnet ist.

9. Vorrichtung nach einem der vorangehenden Ansprüche, dadurch gekennzeichnet, daß die Querträger an ihren Enden mit Z-Profilen (22), deren horizontale obere ($22_3$) und untere ($22_1$) Schenkel auf den Querträgern abgestützt sind, versehen sind, wobei der vertikale Schenkel ($22_2$) und der untere ($22_1$) Schenkel durch Schweißung befestigt sind, bzw. auf den Schmalseiten der Panele (5) und an deren unteren Seite befestigt sind.

10. Vorrichtung nach einem der vorangehenden Ansprüche, dadurch gekennzeichnet, daß die Enden der Panele (5) auf den Querträgern (1, 2, 3) durch sich in Öffnungen des entsprechenden Bereiches (25) findenden Blöcke (24) zentriert und positioniert sind.

11. Vorrichtung nach einem der vorangehenden Ansprüche, dadurch gekennzeichnet, daß Haken (20) seitlich auf den Schmalseiten der panele (5) vorgesehen sind.

12. Vorrichtung nach einem der vorangehenden Ansprüche, dadurch gekennzeichnet, daß die Querträger und/oder Panele mit schrägen Abstützflächen ($27_1$, 28) als Führung der Panele während ihres In-Stallung-Bringens auf den Querträgern versehen sind.

13. Vorrichtung nach Anspruch 12, dadurch gekennzeichnet, daß die schrägen Abstützflächen parallel bezüglich der Querträger orientierte Abstützflächen ($27_1$) und parallel zur Längsachse der Vorrichtung orientierte Abstützflächen (28) beinhalten.

14. Vorrichtung nach einem der vorangehnden Ansprüche, dadurch gekennzeichnet, daß sie drei gleibeabstandete Querträger (1, 2, 3) umfaßt, wobei der Brückenbelag sich aus vier, zwei zu zwei auf einem endseitigen Querträger (1, 3) und auf einem mittleren Querträger (2) abgestützten Panelen (5) zusammensetzt.

## Claims

1. Apparatus for weighing vehicles, comprising a table with a rectangular general shape supported by a base (4) via force sensors (7), which apparatus is characterized in that the table is composed of at least two panels (5), these panels being arranged so as to bear at their end on at least two transverse beams (1, 2, 3) resting at their ends on sensors (7).

2. Apparatus according to Claim 1, characterized in that the transverse beams (1, 2, 3) receive, bearing on them, the ends of the two panels (5) which delimit between them a channel (8).

3. Apparatus according to Claim 2, characterized in that the channel is closed by a grating (9) bearing laterally on the panels.

4. Apparatus according to any one of the preceding claims, characterized in that the transverse beams (1, 2, 3) have at their ends surfaces (10) bearing on the sensors, which sensors are themselves arranged bearing on the base, these surfaces of the ends of the beams being offset towards the upper face (11) of the beam.

5. Apparatus according to Claim 4, characterized in that the offset surfaces (11) are formed on the lower face of fixed parts projecting from the upper face of the ends of the beams, these projecting parts forming rims for positioning the table panels.

6. Apparatus according to any one of the preceding claims, characterized in that the transverse beams comprise at least one projection (13) on their lateral face directed towards the outside of the apparatus, these projections being placed, with lateral play, in corresponding housings ($14_1$) provided on the base.

7. Apparatus according to Claim 6, characterized in that the housings ($14_1$) for the lateral projections of the beams (1, 3) are formed on cross-members (14) sealed in the base laterally and at a small distance from the transverse beams.

8. Apparatus according to any one of the preceding claims, characterized in that the panels comprise a longitudinal rim projecting from the upper face of the panels, this rim being situated longitudinally at the periphery of the apparatus.

9. Apparatus according to any one of the preceding claims, characterized in that the transverse beams are provided at their ends with Z-shaped sections (22) whose upper ($22_3$) and lower ($22_1$) horizontal limbs bear on the beams, the vertical limb ($22_2$) and the lower horizontal limb ($22_1$) being fixed by welding to the end edges of the panels (5) and to their lower face, respectively.

10. Apparatus according to any one of the preceding claims, characterized in that the ends of the panels (5) are centred and positioned on the beams (1, 2, 3) by studs (24) housed in orifices of corresponding cross-section (25).

11. Apparatus according to any one of the preceding claims, characterized in that hooks (20) are provided laterally on the edge of the panels (5).

12. Apparatus according to any one of the preceding claims, characterized in that the beams and/or the panels are provided with oblique bearing surfaces (27₁, 28) for guiding the panels when they are being placed on the beams.

13. Apparatus according to Claim 12, characterized in that the oblique bearing surfaces comprise bearing surfaces (27₁) oriented parallel to the beams, and bearing surfaces (28) oriented parallel to the longitudinal axis of the apparatus.

14. Apparatus according to any one of the preceding claims, characterized in that it comprises three equidistant transverse beams (1, 2, 3), the table being composed of four panels (5) placed in pairs so as to bear on an end transverse beam (1, 3) and on the middle transverse beam (2).

FIG.1

FIG.5

FIG.4

FIG.3

FIG.2

EP 0 323 293 B1

FIG.6

FIG.7

EP 0 323 293 B1

FIG.8

FIG.9

FIG.10

FIG.11

FIG.12

FIG.13

FIG.14

EP 0 323 293 B1